# FASCICULE DE BREVET EUROPEEN

(11) **EP 1 002 003 B1**
(45) Date de publication et mention de la délivrance du brevet: **19.06.2002**
(21) Numéro de dépôt: 98941552.6
(22) Date de dépôt: 06.08.1998
(51) Int. Cl.: C08G 73/02, H01B 1/12

(54) **PROCEDE DE FABRICATION DE POLYANILINE DE MASSE MOLECULAIRE ELEVEE SOUS FORME D'EMERALDINE**
VERFAHREN ZUR HERSTELLUNG VON POLYANILIN MIT HOHEM MOLEKULARGEWICHT IN SEINER EMERALDINFORM
METHOD FOR MAKING POLYANILINE WITH HIGH MOLECULAR MASS IN THE FORM OF EMERALDINE

(30) Priorité: 07.08.1997 FR 9710135
(43) Date de publication de la demande: 24.05.2000
(73) Titulaire: COMMISSARIAT A L'ENERGIE ATOMIQUE, 75015 Paris (FR)
(72) Inventeur: NICOLAU, Yann-Florent, F-38330 Saint Nazaire-les-Eymes (FR); BEADLE, Paul, Hull HU10 GAW (GB)
(74) Mandataire: Des Termes, Monique
(86) Numéro de dépôt international: FR9801753
(87) Numéro de publication internationale: WO9907766

(56) Documents cités:
- WO-A-92/11644
- WO-A-93/09175
- US-A- 5 254 633
- Y. CAO ET AL.: "COUNTER-ION INDUCED PROCESSIBILITY OF CONDUCTIN POLYANILINE AND OF CONDUCTING POLYBLENDS OF POLYANILINE IN BULK POLYMERS" SYNTHETIC METALS, vol. 48, 1992, pages 91-97, XP000195647
- A. HOPKINS ET AL.: "CHARACTERIZATION OF SOLUTION AND SOLID STATE PROPERTIES OF UNDOPED AND DOPED POLYANILINES PROCESSED FROM HEXAFLUORO-2-PROPANOL" MACROMOLECULES, vol. 29, no. 24, 18 novembre 1996, pages 7838-7846, XP000631129
- Y. CAO ET AL.: "Influence of Chemical Polymerization Conditions on the Properties of Polyaniline" POLYMER, vol. 30, décembre 1989, pages 2305-2311, XP002059769

## Description

### Domaine technique

La présente invention a pour objet un procédé de fabrication de polyaniline de masse moléculaire élevée sous forme d'éméraldine.

De façon plus précise, elle concerne la fabrication d'une polyaniline totalement soluble à l'état d'éméraldine protonée, dans plusieurs solvants organiques, notamment le méta-crésol,grâce à une perfection structurale plus grande, notamment en ce qui concerne les taux de chloration, de pontage et de ramification de la polyaniline obtenue.

### Etat de la technique antérieur

Les polyanilines peuvent être obtenues par oxydation de l'aniline ou de dérivés d'aniline en solution aqueuse, et elles présentent beaucoup d'intérêt en raison de leurs propriétés de conductivité électronique et de leur stabilité à l'air.

La polyaniline est un polymère qui peut se présenter sous différents états d'oxydation selon la formule :

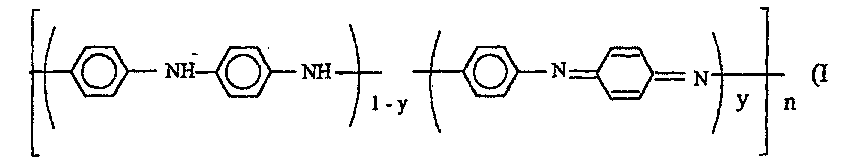

On connaît trois états distincts d'oxydation correspondant à y = 0, 0,5 et 1. Les polyanilines correspondantes sont respectivement la leucoéméraldine base pour y = 0, l'éméraldine base pour y = 0,5 et la pernigraniline pour y = 1.

La polyaniline peut être protonée par un acide de Brönsted fort comme l'acide chlorhydrique (HCl) pour donner un polymère protoné (un sel ionomère) de formule : 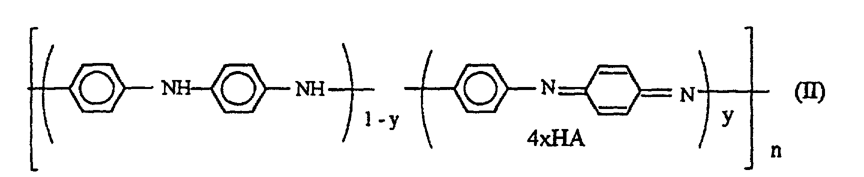 avec y tel que défini ci-dessus et x pouvant varier entre 0 et ~0,75. La forme la plus conductrice est la forme d'éméraldine sel pour y = 0,5 et x = 0,5, dénommée couramment éméraldine. Elle présente une conductivité de l'ordre de 1 à 15 S/cm mesurée sur des pastilles de poudre comprimée.

La poudre d'éméraldine base bien qu'infusible, peut être usinée sous forme de films ou de fibres à partir de sa fraction soluble dans la N-méthylpyrrolidone (NMP) ou la di-méthylpropylèneurée mais les films ou les fibres ne conduisent pas et ne se laissent protoner que très difficilement par les acides très forts. Elle est mieux soluble dans l'acide sulfurique concentré, à partir duquel il est possible d'obtenir des fibres conductrices mais ayant des propriétés mécaniques modestes. Protonée par l'acide (±)-10-camphre sulfonique (ACS), elle est partiellement soluble dans le méta-crésol, ce qui permet d'obtenir des films par l'évaporation du méta-crésol. Pour la plupart des applications, les propriétés électriques et mécaniques d'un polymère dépendent de sa masse moléculaire moyenne en nombre et en masse, Mₙ et M_{w},et de son indice de polydispersion, I.P. = M_{w}/Mₙ, les meilleures propriétés étant obtenues avec une masse moléculaire élevée et un indice de polydispersion réduit. Mais un polymère de masse moléculaire élevée n'a pas grand intérêt s'il ne présente pas à la fois une bonne solubilité sous sa forme conductrice (protonée).

Le document WO-A-93/09175 décrit un procédé de fabrication de polyanilines de masse moléculaire élevée par polymérisation au moyen d'un agent oxydant tel que le persulfate d'ammonium, selon lequel on mélange une première solution comprenant l'aniline, un acide protonique et un sel, avec une seconde solution comprenant l'acide protonique, le sel et au moins un composé efficace pour amorcer la polymérisation telle que le persulfate d'ammonium. On réalise la réaction à une température inférieure à -10°C, de préférence entre -10°C et environ -70°C. On peut suivre la réaction de polymérisation en mesurant en continu le potentiel rédox de la solution de polymérisation par rapport à une électrode de référence au calomel. On peut ainsi obtenir des polyanilines de masse moléculaire élevée, mesurée par chromatographie d'exclusion stérique (CES).

La mise en oeuvre de ce procédé présente certains inconvénients, notamment en ce qui concerne le suivi de la réaction de polymérisation par mesure du potentiel rédox, à une température de -40°C. Par ailleurs la mesure des masses moléculaires effectuée par la CES donne lieu à des erreurs importantes.

En effet, le potentiel rédox de la solution égal au potentiel électrochimique de la polyaniline en cours de synthèse est mesuré pendant la synthèse entre une électrode de Pt et une électrode de référence au calomel, les deux immergées dans le bain de réaction. Pour une température de synthèse de 0 à 3°C donnée dans l'exemple 1Ai de WO-A-93/09715, la fin de la synthèse est indiquée par la décroissance du potentiel en dessous de 430 mV, potentiel correspondant à l'état d'oxydation de l'éméraldine. Mais le potentiel ne peut plus être utilisé pour suivre et indiquer la fin de la synthèse à -40°C, température mentionnée dans l'exemple lAii de ce document, puisque la précipitation du chlorhydrate d'aniline rend impossible la mesure du potentiel. C'est un inconvénient majeur du procédé puisqu'on ne peut pas suivre la synthèse et maîtriser la fin de cette synthèse, qui se produit d'une manière incontrôlée pendant le réchauffement de la suspension avant de séparer la polyaniline par filtration. La température en fin de synthèse n'est pas contrôlée non plus et de ce fait les synthèses ne sont pas reproductibles.

Par ailleurs, en ce qui concerne la mesure des masses moléculaires, les résultats obtenus par la CES sur l'éméraldine base en solution dans la NMP, même en présence de 0,5 % de LiCl, sont assujettis à des erreurs importantes et ne peuvent pas être pris en considération d'une manière quantitative surtout pour déterminer des masses moléculaires élevées, ceci à cause de la solubilité partielle et colloïdale de l'éméraldine base dans la NMP et d'un équilibre d'agrégation entre les macromolécules dissoutes et agrégées qui agit même en solution diluée. De meilleurs résultats sont obtenus en mesurant les masses moléculaires sur la polyaniline à l'état de leucoméraldine dans la NMP.

On peut mieux comparer les M_{w} de différentes polyanilines par la détermination de leurs viscosités inhérentes à 25°C dans l'acide sulfurique concentré, puisque la plupart des polyanilines sont totalement solubles dans cet acide sans dégradation. Néanmoins, cette mesure indique une M_{w} qui résulte du rayon de giration moyen des macromolécules. Ce rayon dépend de M_{w} pour une structure de la chaîne donnée. Mais des conditions différentes de synthèse produisent des chaînes contenant plusieurs types de défauts à des taux différents, parmi lesquels les plus importants sont : la ramification et le pontage des chaînes et la chloration des chaînes. La comparaison des M_{w} des différentes éméraldines bases ne peut se faire par la comparaison de leurs viscosités inhérentes que si leurs chaînes ont les mêmes taux de ramification et de chloration. Le taux de chloration est quelquefois indiqué puisqu'il peut être déterminé par analyse élémentaire, mais pas le taux de ramification et de pontage puisqu'on ne sait pas le déterminer quantitativement. Celui-ci est plutôt apprécié à la fois avec la M_{w} par la solubilité de l'éméraldine base dans la NMP ou dans la diméthylpropylène urée et de l'éméraldine protonée par l'ACS dans le méta-crésol et par la vitesse de gélation de ces solutions. Or le document WO93/09715 n'indique rien, ni sur le taux de chloration ni sur la solubilité de la polyaniline obtenue.

Une synthèse de polyaniline effectuée suivant les conditions de synthèse décrites dans l'exemple 1Aii de WO-A-93/09175, à -40°C, en présence de 5,8M de LiCl, a donné une éméraldine base contenant une fraction en poids de polymère insoluble à l'état protoné par l'ACS dans le méta-crésol de ∼15 % et un taux de chloration de ~3 %.

Ainsi, ce procédé de synthèse ne peut conduire à une polyaniline de masse moléculaire élevée ayant un taux de chloration négligeable et un taux de ramifications et de pontages faible, capable de rendre l'éméraldine protonée par l'ACS totalement soluble dans le méta-crésol ou dans l'hexafluoroisopropanol pour permettre l'obtention de films auto-supportés de haute conductivité.

Le document Y. Cao et al, Synthetic Metals, 48, 1992, p. 91-97, illustre l'utilisation d'acide camphre-sulfonique pour protoner une polyaniline en vue de pouvoir la transformer, sous forme conductrice, en film et fibres.

Le document A. Hopkins et al, Macromolecules, vol. 29, 1996, p. 7838-7846, décrit des polyanilines dopées et non dopées, sous forme d'éméraldines, obtenues par oxydation d'aniline avec du chlorure ferrique, suivi ou non d'un dopage par un acide monosulfonique.

### Exposé de l'invention

La présente invention a précisément pour objet un procédé de fabrication de polyanilines, qui pallie les inconvénients du procédé rappelé ci-dessus, qui permet d'obtenir en un temps court, d'une manière reproductible, un polymère de masse moléculaire élevée ayant un taux de chloration négligeable et un taux de ramifications et de pontages faible, totalement soluble dans le méta-crésol ou dans l'hexafluoroisopropanol sous forme d'éméraldine protonée par l'ACS, ce procédé étant de plus adapté à une mise en oeuvre à l'échelle industrielle.

Selon l'invention, le procédé de fabrication d'une polyãniline de masse moléculaire élevée sous forme d'éméraldine, comprend les étapes suivantes :
a) polymériser l'aniline ou un dérivé d'aniline en pernigraniline, en effectuant la polymérisation dans une solution aqueuse homogène comprenant l'aniline ou le dérivé d'aniline, un acide protonique, un sel, un agent oxydant et de l'éthanol, de façon à obtenir une pernigraniline,
b) réduire la pernigraniline obtenue dans l'étape a) en éméraldine au moyen d'une solution aqueuse réductrice ne contenant pas d'aniline.

Ce procédé se différencie notamment du procédé décrit dans WO-A-93/09175 par le fait que l'on effectue la polymérisation de l'aniline au stade de la pernigraniline, qui correspond à la formule (I) donnée ci-dessus avec y = 1, et que l'on effectue ensuite la réduction de cette pernigraniline en éméraldine au moyen d'une solution aqueuse réductrice qui ne comprend pas d'aniline.

En effet, dans le procédé de l'art antérieur, cette étape de réduction se produit au moyen de l'aniline en excès et non d'un réducteur convenablement choisi.

Selon l'invention, le dérivé d'aniline qui peut être mis en oeuvre dans l'étape a) peut être une aniline substituée soit sur le groupe NH₂, soit sur le noyau benzènique, soit sur les deux, par un ou plusieurs groupes tels que des groupes alkyle, alcoxy, alkylcarboxyle ou alkyl sulfonique.

A titre d'exemple de tels dérivés on peut citer les N-méthylaniline, o-toluidine, o-butylaniline, o-méthoxyaniline et N-(4-butyl-1-sulfonique)aniline...

Pour la polymérisation, l'acide protonique utilisé peut être choisi parmi plusieurs acides protoniques forts résistant à l'oxydation. On peut utiliser par exemple, les acides suivants : HCl, H₂SO₄, ou HClO₄. De préférence, on utilise l'acide chlorhydrique HCl.

Les sels utilisés pour la polymérisation sont de préférence des sels comportant le même anion que l'acide utilisé. Ainsi, on peut utiliser des chlorures, sulfate, acétate et nitrate de métaux tels que les métaux alcalins et l'ammonium. De préférence, on utilise le chlorure de lithium.

Les agents oxydants susceptibles d'être utilisés pour la polymérisation peuvent être choisis parmi les oxydants susceptibles d'oxyder l'aniline tels que le persulfate d'ammonium, K₂Cr₂O₇, KIO₃, KMnO₄ et H₂O₂⁺ FeCl₃. On utilise de préférence, le persulfate d'ammonium (NH₄)₂ S₂O₈.

Pour réaliser l'étape de polymérisation, on opère de préférence à une température située dans la gamme allant de -45°C à -5°C.

De préférence, on réalise cette étape en ajoutant à une solution aqueuse d'aniline ou de dérivé d'aniline, contenant l'acide protonique, le sel et de l'éthanol, une solution de l'agent oxydant et du sel dans l'acide protonique.

Les concentrations des constituants des deux solutions et leur apport de mélange sont de préférence tels que la solution aqueuse de polymérisation comprend :
- 0,25 à 0,5 mol/l d'aniline ou de dérivé d'aniline (An),
- 0,5 à 2 mol/l d'acide chlorhydrique,
- 2 à 3 mol/l de chlorure de lithium,
- 30 à 40 % en volume d'éthanol, et
- une quantité de persulfate d'ammonium (PSA) telle que le rapport molaire du persulfate d'ammonium à l'aniline ou au dérivé d'aniline PSA/An soit de 0,2 à 1,5.

Par ailleurs, on contrôle la réaction de polymérisation en déterminant le potentiel rédox de la solution aqueuse dans laquelle s'effectue la polymérisation de façon à arrêter cette réaction de polymérisation par addition de la solution réductrice lorsque le potentiel rédox amorce une décroissance après avoir atteint une valeur maximale. Cette valeur maximale peut se situer dans la gamme de 780 à 820 mV par rapport à une électrode de référence au calomel.

L'étape de réduction b) peut être effectuée en utilisant diverses solutions réductrices.

De préférence, la solution réductrice est une solution aqueuse de chlorure ferreux comprenant l'acide protonique et le sel utilisés dans l'étape a).

On peut utiliser en particulier une solution de FeCl₂ de concentration comprise entre 2,5 et 3 M contenant du LiCl en concentration de 2 à 2,5 M dans HCl en concentration de 1,5 à 2,5 M, contenant le double de la quantité nécessaire pour réduire la polyaniline de l'état d'éméraldine. On peut aussi utiliser comme solution réductrice une solution aqueuse de chlorure de cuivre CuCl ou de chlorure d'étain SnCl₂ comprenant l'acide protonique et le sel utilisé dans l'étape a), la concentration en CuCl ou SnCl₂ de ladite solution étant de 1 à 2 mol/l.

Après l'étape de réduction, le procédé de l'invention comprend de préférence une étape supplémentaire c) consistant à soumettre l'éméraldine séparée du milieu réactionnel de l'étape b) à un traitement d'extraction et de post-polymérisation par du chloroforme.

Généralement, on soumet préalablement l'éméraldine séparée du milieu réactionnel de l'étape b) à une déprotonation avant d'effectuer l'étape c).

La réalisation de cette étape c) d'extraction par le chloroforme permet d'augmenter la masse moléculaire de la polyaniline par élimination des oligomères de faible masse moléculaire et par un phénomène complémentaire de post-polymérisation.

Après l'étape d'extraction par le chloroforme, on réalise avantageusement une étape complémentaire de déprotonation de l'éméraldine traitée.

Le procédé de l'invention est particulièrement avantageux car il permet d'obtenir une polyaniline sous forme d'éméraldine de masse moléculaire élevée, qui est totalement soluble dans le méta-crésol après protonation par l'ACS. Les solutions obtenues peuvent être utilisées pour préparer par évaporation du méta-crésol des films de polyaniline autosupportés de conductivité électrique élevée, allant par exemple de 250 à 350 S/cm.

Les polyanilines, sous forme d'éméraldine base obtenues par le procédé de l'invention présentent une viscosité inhérente ηᵢₙₕ, à 25°C, en solution à 0,1 % dans l'acide sulfurique concentré, de 1,8 à 2,2 dl/g.

D'autres caractéristiques et avantages de l'invention apparaîtront mieux à la lecture de la description qui suit, donnée bien entendu à titre illustratif et non limitatif en référence aux dessins annexés.

### Brève description des dessins

La figure 1 est un graphique illustrant l'évolution du potentiel (en mVolt) en fonction du temps (en minutes) lors de la fabrication de la polyaniline (courbe 1) et, l'évolution de la température en (°C) en fonction du temps (en minutes) au cours de cette fabrication (courbe 2), dans le cas de l'exemple 1.

La figure 2 est un graphique illustrant la durée (en minutes) de l'étape de polymérisation en fonction de la température utilisée pour cette étape (en °C).

La figure 3 est un graphique illustrant l'évolution de la viscosité ηᵢₙₕ en dl/g en fonction de la température de fabrication en °C (courbe 1), et l'évolution de la conductivité σ en S/cm en fonction de cette température en °C (courbe 2).

La figure 4 est un graphique illustrant les variations de la conductivité (S/cm) en fonction de la viscosité inhérente (ηᵢₙₕ en dl/g)

Les figures 5 et 6 sont des spectres d'absorption UV, vis., IR proche d'une polyaniline obtenue à -30°C (figure 5) et à -7°C (figure 6) protonée par l'ACS en solution dans le métacrésol.

Les figures 7 et 8 sont des spectres d'absorption UV IR proche obtenus sur une éméraldine base synthétisée à -7°C, non soumise à l'étape d'extraction par le chloroforme (figure 7), et soumise à cette étape d'extraction (figure 8) en solution dans la NMP contenant 0,5 % de LiCl.

Les figures 9 et 10 représentent les spectres d'absorption d'une polyaniline sous forme d'éméraldine, synthétisée à -7°C, protonée par l'ACS dans le méta-crésol, obtenus avec l'éméraldine base non soumise à l'extraction (figure 9) et avec l'éméraldine base soumise à l'extraction (figure 10).

La figure 11 est un graphique qui illustre l'évolution du potentiel (courbe 1) et l'évolution de la température (courbe 2) du milieu réactionnel dans le cas de l'exemple 2.

### Exposé détaillé des modes de réalisation

On décrit ci-après un mode de réalisation du procédé de l'invention dans lequel on utilise pour la polymérisation de l'aniline, un acide protonique constitué par HCl , un sel constitué par LiCl et du persulfate d'ammonium comme agent oxydant. On décrit tout d'abord la réalisation de l'étape de polymérisation.

### a) L'étape de polymérisation

On peut réaliser cette étape en utilisant un réacteur à double paroi refroidi par la circulation d'un liquide réfrigérant thermostaté permettant de refroidir le réacteur jusqu'à -45°C en assurant un bon transfert thermique.

On introduit d'abord dans le réacteur une première solution aqueuse de chlorhydrate d'aniline provenant soit d'une aniline purifiée par distillation sous vide, soit d'un chlorhydrate d'aniline recristallisé, dans du HCl en présence de LiCl et d'éthanol, et on refroidit cette solution dans le réacteur sous agitation à la température de synthèse.

On plonge dans cette solution une électrode de Pt, une électrode de référence au calomel ou à Ag/AgCl par l'intermédiaire d'un pont électrolytique, qui ne cristallise et ne gèle pas à la température de synthèse (par exemple un pont contenant une solution de LiCl dans l'éthanol) et une sonde de température (par exemple une résistance de Pt de 100 Ω). On relie avantageusement les électrodes et la sonde à un pHmètre-mVmètre digital informatisé, contrôlé par un ordinateur, permettant d'enregistrer le potentiel rédox de la solution et sa température point par point pendant la synthèse.

On prépare une seconde solution contenant du persulfate d'ammonium (PSA) dans du HCl en présence de LiCl, et on refroidit à la température de synthèse également.

On commence la polymérisation en déversant d'un seul coup la seconde solution de PSA dans le réacteur contenant la première solution de chlorhydrate d'aniline et on commence l'enregistrement du potentiel rédox de la solution et de la température toutes les 15,30 ou 60 secondes. On suit l'évolution de la synthèse en suivant l'évolution du potentiel et de la température en fonction du temps.

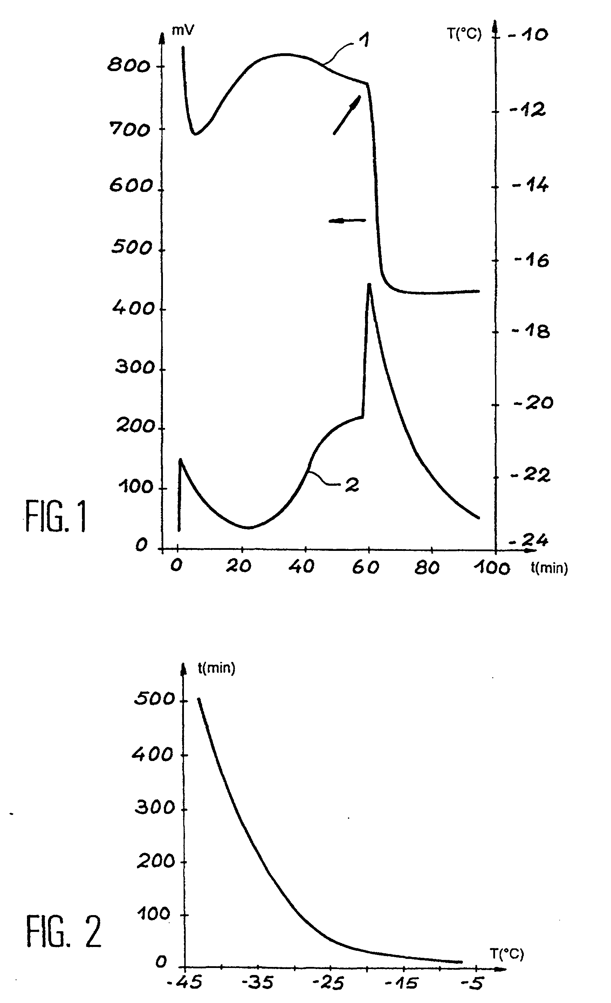

La courbe 1 de la figure 1 représente l'évolution du potentiel (en mV) en fonction du temps (min), et la courbe 2 illustre l'évolution de la température (en °C) en fonction du temps (en min).

Sur la figure 1, on voit ainsi que dès l'ajout de l'oxydant, on observe une montée immédiate du potentiel rédox, ensuite le potentiel décroît et atteint un minimum, puis il remonte et en restant pratiquement constant, il décrit un plateau à 800-820 mV. Dès l'ajout de l'oxydant, la température décroît pendant que le potentiel décroît et elle remonte ensuite. La température monte dès que le potentiel décrit le plateau et continue à monter pendant que le potentiel reste sur le plateau.

Pendant ce temps, le PSA oxyde l'aniline qui polymérise par un mécanisme radicalaire-anionique pour former la polyaniline à l'état d'oxydation correspondant à la pernigraline selon la réaction de polymérisation globale :

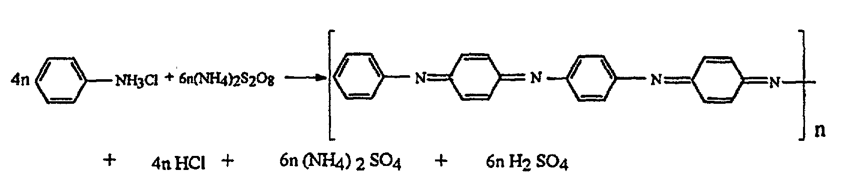

Quand le potentiel amorce une décroissance, ce qui correspond à un maximum de température, tout le PSA est réduit et l'étape de polymérisation est terminée.

Généralement, on prépare une solution d'aniline et une solution de PSA de la sorte qu'après les avoir mélangées la concentration en aniline soit de 0,25 à 0,5M, la concentration en HCl de 0,5 à 2M, la concentration en LiCl de 2 à 3M, le rapport molaire PSA/aniline de 0,2 à 1,5 et la concentration en éthanol de 30 à 40 % en volume. On dissout du LiCl aussi bien dans la solution d'aniline que dans la solution de PSA ; le rapport molaire entre la quantité de LiCl dissoute dans la solution d'aniline la quantité de LiCl dissoute dans la solution de PSA sera choisi entre 1,5 et 2,5, le rapport en volume de la solution d'aniline et de la solution de PSA sera choisi entre 2 et 3, mais on n'ajoutera pas d'éthanol à la solution de PSA. Ces domaines de concentrations et de rapports ont été déterminés expérimentalement pour produire un polymère de masse moléculaire élevée, pour éviter la chloration tout en gardant une cinétique rapide et un bon rendement. La solution d'aniline aussi bien que celle de PSA et leur mélange ne laissent cristalliser aucun composant à la température de synthèse, ce qui assure une cinétique rapide conduisant à la formation des chaînes de masse moléculaire élevée.

La réaction de polymérisation exothermique est effectivement rapide puisque malgré le refroidissement on ne peut pas empêcher la température de monter de 5 à 9°C.

Il est possible d'utiliser, à la place d'un réacteur à double paroi refroidi par la circulation d'un liquide réfrigérant, un réacteur simple introduit dans un vase Dewar refroidi par des cristaux de o-oxylène, nitrométhane ou tétrachloroéthane aux points de fusion correspondants, ce qui revient à des températures de synthèse de -25, -29 et -43°C, respectivement. Il est également possible d'enregistrer d'une autre manière le potentiel rédox et la température, par exemple en utilisant des imprimantes digitales ou des tables traçantes.

En début de polymérisation, suite à l'addition de la solution de PSA à la solution d'aniline, le PSA oxyde l'aniline déprotonée pour former un radical cation qui se dimérise ensuite. C'est ainsi que le potentiel décroît, à partir de 800 - 830 mV vers 680 mV, et la température décroît de 1 - 3°C pendant les premières 15 - 20 min, puisque la déprotonation du chlorhydrate d'aniline et l'oxydation de l'aniline sont des réactions endothermiques.

La polymérisation progresse ensuite en chaîne par l'addition des cations radicaux aux dimères, trimères, oligomères et polymères cations radicaux en cours de croissance. Ainsi, le potentiel monte et reste sur un plateau à 800 - 820 mV pendant la polymérisation jusqu'à l'épuisement du PSA et la température monte pour arriver à un maximum.

La précipitation de la pernigraniline se produit dès que les chaînes se forment mais elle devient visible après environ 20 min, ce qui correspond à l'arrivé du potentiel sur le plateau. La polymérisation est rapide et il n'y a pas de réaction d'arrêt systématique limitant la taille du polymère. La chaîne s'arrête de grandir soit par manque de monomères oxydés, soit par l'inactivation de ses extrémités suite à la précipitation du polymère. Tout paramètre de synthèse qui accélère la polymérisation et ralentit la germination des chaînes augmente la masse moléculaire du polymère. Ainsi, l'emploi de basses températures (-45° à -50°C), l'ajout du LiCl et la dilution agissent dans ce sens.

L'emploi d'une basse température réduit la vitesse de polymérisation mais il réduit davantage la vitesse d'oxydation de l'aniline et la vitesse d'hydrolyse de la pernigraniline (rupture des chaînes avec blocage des positions réactives par la formation des groupements quinone, >CO, et nitroso, >NO), ce qui conduit à obtenir des masses moléculaires plus élevées.

Sur la figure 2 qui représente la durée de polymérisation en fonction de la température utilisée pour cette polymérisation, on voit que le temps de polymérisation augmente beaucoup lorsque la température de synthèse décroît de -30°C à -45°C ou plus ; par conséquent on choisit avantageusement une température de synthèse de -25°C à -30°C.

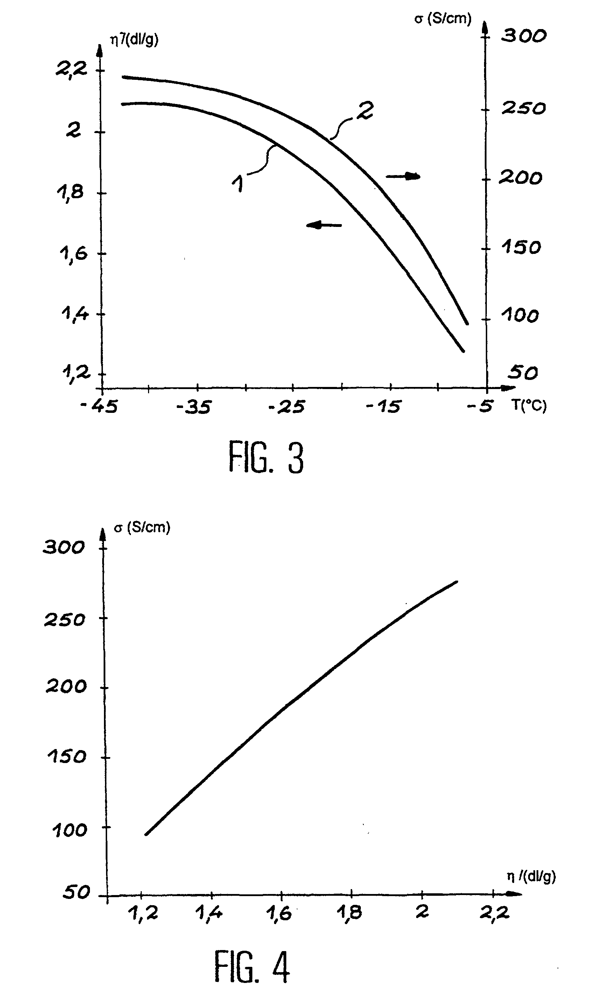

Sur la figure 3, la courbe 1 qui représente l'évolution de la viscosité inhérente ηᵢₙₕ (en dl/g) en fonction de la température de polymérisation, on voit que la viscosité diminue lorsque la température augmente. Des masses moléculaires plus élevées sont donc obtenues aux plus basses températures,

L'agent de LiCl augmente la force ionique de la solution, ce qui augmente la vitesse de polymérisation et diminue la vitesse de germination des chaînes et a pour conséquence l'augmentation de la masse moléculaire des chaînes. L'effet est important jusqu'à une concentration de ~2M. Au-delà d'une concentration de 3,4M, la masse moléculaire n'augmente plus et en augmentant vers 5,2M au contraire la masse moléculaire décroît puisque la viscosité de la solution augmente trop. En plus, l'augmentation de la concentration de LiCl assiste la chloration des chaînes.

La concentration de l'aniline peut être augmenté à plus de 0,5M mais au détriment de la masse moléculaire ; elle peut aussi être diminuée à moins de 0,25M mais au détriment de la productivité.

L'ajout d'éthanol entre 30 et 40 % en volume ne diminue pas la masse moléculaire suite à la décroissance de la force ionique de la solution puisque l'effet est apparemment compensé par la décroissance de la viscosité de la solution et par l'introduction d'un retard inattendu à la précipitation du polymère.

Le rendement par rapport au PSA est de 95 - 100 %. Le rendement par rapport à l'aniline dépend du rapport molaire PSA/An. Il approche de 90 - 95 % pour des rapports molaires PSA/An de 1,2 - 1,5, mais en augmentant ce rapport, on diminue la masse moléculaire puisqu'on favorise l'hydrolyse des chaînes et il devient aussi plus difficile de déterminer la fin de la polymérisation pour faire la réduction. Il est préférable de choisir des rapports molaires PSA/An ≤ 1. Ces rendements ont été déterminés sur l'éméraldine base brute de synthèse, incluant donc les étapes suivantes de réduction et de déprotonation de l'éméraldine. Mais ils sont déterminés par l'étape de polymérisation puisque la réduction et la déprotonation sont presque quantitatives. Le rendement par rapport à l'aniline décroît avec la décroissance du rapport molaire PSA/An du fait qu'on prend un excès d'aniline qui n'étant pas oxydée, ne prend pas part dans la polymérisation. Cet excès peut être récupéré à partir du filtrat. Par rapport à l'aniline oxydée, le rendement en polymère est aussi de 95 - 100 % puisqu'il se forme seulement quelques % d'oligomères.

### b) l'étape de réduction

Pour obtenir la polyaniline sous la forme d'éméraldine, on réduit la pernigraniline obtenue dans l'étape a) en ajoutant d'un seul coup une solution réductrice au moment où le potentiel rédox du milieu amorce une décroissance, ce qui coïncide avec une température maximale du milieu de polymérisation. On refroidit au préalable la solution réductrice à la température de fin de polymérisation. Parmi les réducteurs, on choisit avantageusement le chlorure ferreux (FeCl₂), le chlorure cuivreux (CuCl) ou le chlorure stanneux (SnCl₂) en solution dan le HCl. On choisit de préférence des solutions concentrées qui ne cristallisent pas à la température de synthèse. Pour empêcher la cristallisation on ajoute du LiCl aux solutions.

Lorsqu'on utilise du FeCl₂, la réduction de la pernigraniline (PNA) en éméraldine se produit selon la réaction globale :

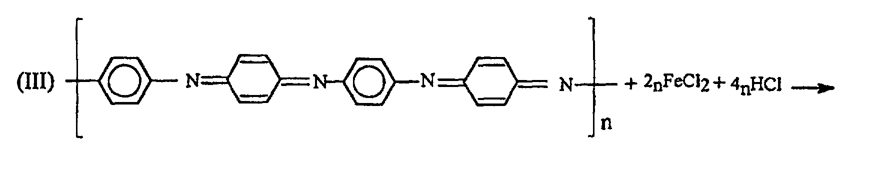

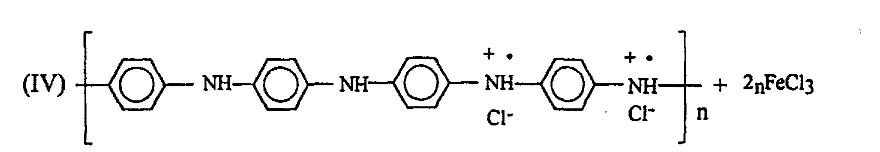

La concentration du FeCl₂ est de préférence de 2,5 à 3,5 mol/l en présence de 2 à 2,5 mol/l de LiCl dans 1,5 à 2,5 mol/l de HCl. Généralement, on prend deux fois la quantité nécessaire de FeCl₂ pour réduire la PNA en éméraldine. Ainsi, la réduction sera totale et immédiate et le potentiel final correspondra au potentiel rédox du système Fe²⁺/Fe³⁺ à un rapport de concentrations [Fe²⁺]/[Fe³⁺] = 1, de l'ordre de 430 - 450 mV vs l'ESC à 25°C à la concentration de HCl utilisée, ce qui correspond à l'état d'oxydation de l'éméraldine.

Si on utilise du CuCl ou du SnCl₂ comme réducteur, on doit prendre des quantités stoechiométriques pour éviter de réduire la pernigraniline au-delà de son état d'oxydation correspondant à l'éméraldine. On peut suivre la décroissance du potentiel rédox qui ne doit pas décroître au-delà de 360-380 mV à la température de synthèse. La concentration des solutions de CuC1 ou de SnC1₂ sera choisie entre 1 et 2M, en présence de 2 à 2,5M LiC1 dans HC1 1,5 - 2,5M.

Comme on peut le voir sur la figure 1, courbe 1, le potentiel rédox en fin de polymérisation amorce une décroissance à partir de ~800 mV ; au moment de l'ajout de la solution réductrice, il décroît brusquement vers 360 - 380 mV, ce qui indique la réduction totale de la pernigraniline en éméraldine. La réaction de réduction est aussi exothermique et rapide ; la température du bain monte rapidement de 3 - 4°C, mais c'est sans importance pour la qualité du polymère. La température redescend ensuite lentement vers la température de consigne (de synthèse) selon la capacité de transfert thermique du réacteur, mais ce n'est pas impérativement nécessaire ; on peut arrêter le refroidissement et filtrer la suspension de polyaniline ou laisser la solution se réchauffer jusqu'à la température ambiante et filtrer ensuite sur un filtre ayant une porosité de ~10 µm permettant de filtrer les solutions acides. On lave abondamment le précipité avec une solution de HCl 0,5 - 1M et on le sèche ensuite dans une étuve à vide à une température de 40 - 50°C pendant 12 à 24 h. On obtient ainsi l'éméraldine brute de synthèse sous la forme d'une poudre verte noire protonée par HCl.

Cette étape de réduction de la pernigraniline en éméraldine est très importante dans l'invention car elle permet de contrôler le taux de pontage et de ramifications de la polyaniline obtenue.

En effet, dans la synthèse de l'art antérieur, la pernigraniline formée est réduite par l'excès d'aniline avec formation d'un nombre q d'oligomères de rang p suite à l'oxydation de l'aniline par la PNA pour former des radicaux cations selon la réaction :

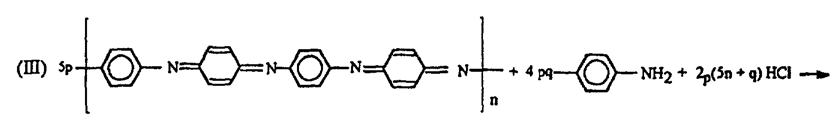

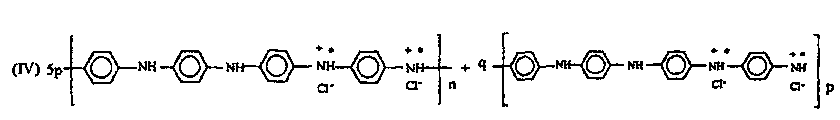

Les oligomères ont un degré de polymérisation DP ≥ 2, pas seulement un multiple de 4 comme la réaction l'indique pour simplifier la formulation. Mais en parallèle avec la formation des oligomères, les molécules d'aniline réduisent la PNA avec une probabilité plus grande d'addition aux chaînes selon un mécanisme auto-catalytique, ce qui conduit aux ramifications et aux pontages suivant les deux possibilités : 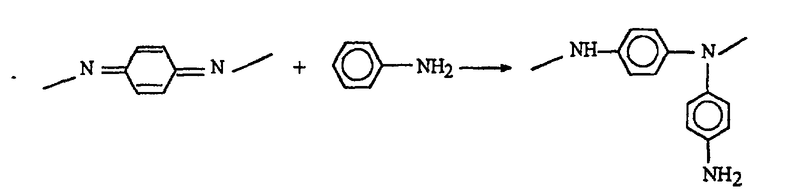 ou 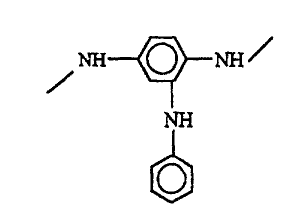 à côté de l'allongement des chaînes :

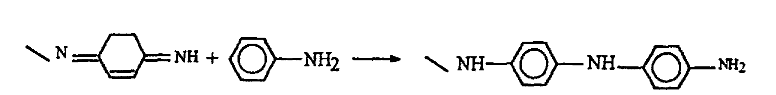

Ce mécanisme de polymérisation auto-catalytique est actif aussi pendant l'étape de polymérisation à côté du mécanisme radicalaire. Toutefois pendant cette étape, tant qu'il y a encore du PSA, la polymérisation radicalaire en chaîne est bien plus rapide que la polymérisation auto-catalytique.

Le procédé objet de l'invention est spécialement conçu pour éviter au maximum la polymérisation auto-catalytique génératrice de défauts d'agencement et d'oligomères.

A la place du FeC1₂, CuC1 ou SnC1₂ on peut utiliser dans la solution de réduction d'autres réducteurs courants comme le sulfite, le métabisulfite, l'hydrosulfite, l'hypophosphite de sodium ou l'acide hypophosphorique, mais ces réducteurs ayant un caractère nucléophile risquent de sulfoner ou de phosphoner la polyaniline et il faut les utiliser seulement si on souhaite produire une polyaniline auto-protonée.

Pour obtenir la polyaniline sous sa forme d'éméraldine base, on déprotone la poudre d'éméraldine brute de synthèse obtenue à la fin de l'étape b) en la mettant en suspension, sous agitation, dans une solution d'hydroxyde d'ammonium 0,1 - 0,3M pendant 48 à 72 h. On filtre la suspension d'éméraldine base sur un filtre ayant une porosité de ~10 µm, on lave abondamment à l'eau déminéralisée et on sèche sous vide à la température ambiante pendant 12 à 24 h. On obtient ainsi l'éméraldine base brute de synthèse sous la forme d'une poudre bleu marine noire.

On soumet cette éméraldine base brute à une extraction avec du chloroforme p.a. (99,9 % stabilisé avec 0,5 - 1 % d'éthanol) pendant 6 à 12 h dans un extracteur Soxhlet, pendant le temps nécessaire pour siphonner un chloroforme incolore. On sèche ensuite l'éméraldine base d'abord à l'air, ensuite sous vide, à la température ambiante. On répète ensuite l'opération de déprotonation avec une solution d'hydroxyde d'ammonium dans les mêmes conditions que précédemment pour obtenir l'éméraldine base sous sa forme finale.

L'extraction par le chloroforme permet d'enlever 0,3 - 0,7 % d'oligomères et d'autres produits secondaires ayant une Mp ~3000 g/mol. On a trouvé que l'extraction par le chloroforme augmente la masse moléculaire de l'éméraldine base de 5 à 50 %, bien plus que l'élimination des chaînes à faible masse moléculaire ne le justifie. En effet, pendant l'extraction, une post-polymérisation inattendue se produit, qui était inconnue jusqu'à présent. Mais l'extraction ne rend pas l'éméraldine base partiellement insoluble dans la NMP ou dans l'acide sulfurique concentré comme il peut arriver en faisant des extractions par l'acétonitrile et surtout par le tétrahydrofuranne.

Les films d'éméraldine extraite, déprotonée et reprotonée par l'ACS, obtenus par l'évaporation du méta-crésol à partir d'une solution dans le méta-crésol présentent une conductivité supérieure aux films obtenus à partir de l'éméraldine brute de synthèse, augmentation qui peut aller jusqu'à 50 %.

### Caractérisation et contrôle de la qualité du polymère

Pour caractériser la polyaniline obtenue, on mesure :
- la masse moléculaire de l'éméraldine base directement par chromatographie d'exclusion stérique (CES) et indirectement par une mesure de viscosité inhérente ;
- la conductivité du film d'éméraldine protonée par l'ACS, obtenu par l'évaporation du méta-crésol ;
et on enregistre :
- le spectre d'absorption UV, vis. de l'éméraldine base dans la NMP contenant 0,5 % de LiCl ; et
- le spectre d'absorption UV vis. IR proche de la solution d'éméraldine protonée par l'ACS dans le méta-crésol qui a servi pour obtenir le film.

On détermine la viscosité inhérente des solutions à 0,1 % d'éméraldine base dans l'acide sulfurique à 97 %, à 25°C, en utilisant un viscosimètre capillaire Ubbelohde ayant un diamètre du capillaire de 0,3 - 0,5 mm.

La courbe 1 de la figure 3 illustre l'évolution de la viscosité inhérente ηᵢₙₕ (dl/g) de l'éméraldine base en fonction de la température de synthèse (en °C).

Ainsi, on voit que la viscosité inhérente des solutions d'éméraldine base augmente lorsque la température de synthèse décroît. Pour des échantillons synthétisés entre -25°C et -30°C, elle se trouve entre 1,8 et 2,2 dl/g.

A titre de comparaison avec d'autres déterminations de masse moléculaire faites par CES, on a déterminé la masse moléculaire d'échantillons d'éméraldine base obtenus conformément à l'invention par CES en utilisant une colonne PLgel 10µm mixed-B, Polymer Labs. maintenue à 80°C, étalonnée avec des polymères standards de polystyrène et comme détecteur un réfractomètre, sur des solutions d'éméraldine base à 0,05 % dans la NMP contenant 0,5 % de LiCl, préalablement filtrées sur un filtre de porosité 0,2 µm, sous une vitesse d'écoulement de 0,5 ml/min. La M_{w} déterminée par CES sur des solutions d'éméraldine base synthétisées à bases températures selon notre procédé de fabrication plafonne vers 150.000 - 170.000 g/mol, avec un I.P. se situant entre 2 et 3. Ceci est dû au fait que les valeurs obtenues sont sous-estimées du fait que les chaînes d'éméraldine base de masse moléculaire élevée forment des amas colloïdaux dans la solution de NMP même en présence de LiC1, amas qui restent sur le filtre avant l'injection de la solution dans la colonne. Par conséquent il n'est pas possible de comparer la masse moléculaire des échantillons à l'état d'éméraldine base. Pour une température de synthèse de -30°C, on a déterminé une M_{w} plus proche de la réalité de ~200.000 g/mol en injectant dans la colonne la solution d'éméraldine base réduite à l'état de leucoéméraldine base par la phénylhydrazine.

On peut comparer la masse moléculaire et la perfection des chaînes en terme de stoechiométrie dans la longueur de conjugaison, c'est-à-dire considérer le rapport effectif entre les noyaux quinoniques et benzéniques, en comparant les spectres d'absorption UV, vis. des solutions d'éméraldine base à 0,05 % dans la NMP contenant 0,5 % de LiCl. Ces spectres présentent un pic d'absorption dans l'UV à 330 - 332 nm, correspondant à la transition excitonique des noyaux benzéniques et un autre vers 660 - 680 nm, correspondant à une transition excitonique des noyaux quinoniques formant des groupements de quinonediimine. Au même état rédox (c'est-à-dire au même potentiel en fin de synthèse presque toujours observé, potentiel correspondant à l'état d'oxydation de l'éméraldine) on doit observer le même rapport entre l'intensité du pic à 660 - 680 nm et l'intensité du pic à 330 - 332 nm, Iₑₓ/I_{π-π*} = approx. constant, correspondant à la stoechiométrie Q/B = 1/3, où Q représente les noyaux quinoniques et B les noyaux benzéniques. Au même état rédox la longueur d'onde du pic de quinonediimine dépend de la longueur de conjugaison (longueur statistique moyenne entre deux défauts) qui détermine la planéité des chaînes ; elle augmente avec l'accroissement de celle-ci.

La comparaison des spectres d'échantillons provenant de synthèses différentes montre des différences concernant aussi bien la longueur d'onde du pic de quinonediimine que le rapport des intensités des pics. On trouve des longueurs d'onde du pic excitonique entre ~660 et 680 nm et des rapports des intensités entre ~0,8 et 1,06. Des intensités de pics plus grandes correspondent à des longueurs d'onde plus grandes, ce qui indique moins d'écart à la stoechiométrie pour les échantillons ayant des longueurs de conjugaison plus grandes, des chaînes plus planes.

On mesure la conductivité des films auto-supportés d'éméraldine protonée par l'ACS, de 25 µm en épaisseur, par la méthode van der Pauw. Les films ont été obtenus par évaporation du méta-crésol à l'air, à 50°C, pendant trois jours, sur un support en polypropylène, à partir d'une solution d'éméraldine base à 0,5 % dans le méta-crésol. L'éméraldine base a été protonée par l'ACS à un taux de 1H⁺/2N en solution dans le méta-crésol par agitation pendant un mois. Les films ont été détachés de leurs substrats par immersion dans une solution d'ACS 1M, rincés avec de l'acétonitrile et séchés avant la mesure. La conductivité des films provenant de synthèses conformes à l'invention varie de 100 à ~350 S/cm, comme il apparaît sur la courbe 2 de la figure 3. Ainsi la conductivité augmente avec l'abaissement de la température de synthèse, comme la viscosité inhérente des solutions dans l'acide sulfurique faites à partir des mêmes échantillons d'éméraldine ayant servi pour faire les films.

Sur la figure 4, on a illustré la corrélation entre la conductivité et la viscosité inhérente, donc la masse moléculaire. Au vu de cette figure, il apparaît clairement que la conductivité augmente avec la masse moléculaire.

Les valeurs de conductivité et de viscosité inhérente ayant servi pour établir les figures 3 et 4 représentent des valeurs moyennes faites à des températures allant de -7 à -43°C.

Les spectres d'absorption UV, vis., IR proche ont été enregistrés sur un spectrophotomètre Varian Carry 2400 à partir d'une goutte de solution, servant pour obtenir des films, étalée par adhésion capillaire entre deux plaques de quartz infrasil. Les spectres d'absorption UV vis. IR proche de l'éméraldine protonée par l'ACS dans le méta-crésol dépendent de la masse moléculaire et de la qualité de l'éméraldine base.

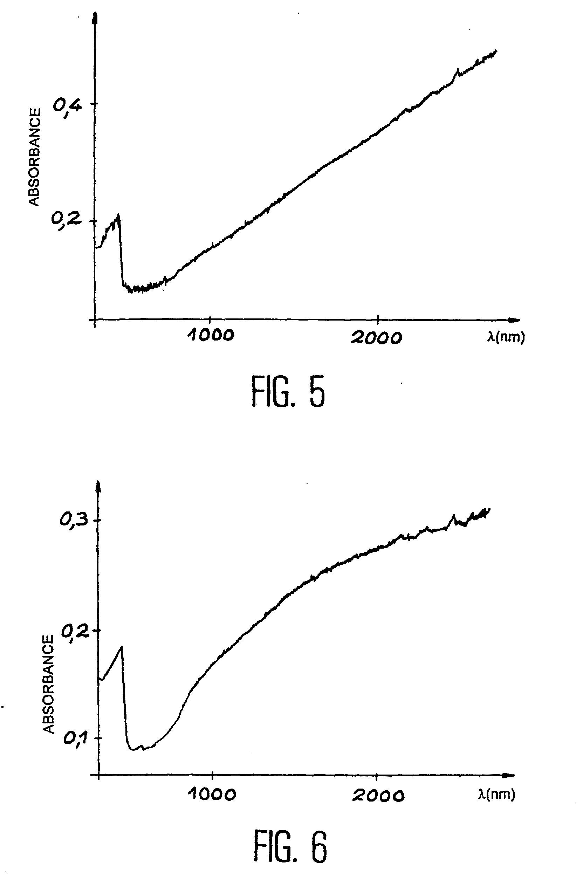

La figure 5 illustre le spectre obtenu sur un échantillon synthétisé à une température de -30°C.

La figure 6 illustre le spectre provenant d'un échantillon synthétisé à une température de consigne de -7°C.

Le spectre de l'éméraldine synthétisée à -30°C (figure 5) présente un pic polaronique à 440 nm plus arrondi et une bande d'absorption très intense et très large ayant son maximum loin dans l'IR proche, à la différence du spectre de l'éméraldine synthétisée à -7°C (figure 6) qui présente un pic plus pointu à 444 nm et une bande d'absorption dans l'IR proche plus concave, indiquant un maximum d'absorption moins éloigné. L'échantillon d'éméraldine synthétisée à -30°C se caractérise par une viscosité inhérente ηᵢₙₕ de 2,0 dl/g, une longueur d'onde du pic excitonique λₑₓ de 678 nm, un rapport des intensités des pics d'absorption UV/vis. I_{ex/}I_{π - π*} de 1,05 et une conductivité σ de 270 S/cm.

L'échantillon d'éméraldine synthétisée à -7°C se caractérise par une viscosité inhérente ηᵢₙₕ de 0,94 dl/g, une longueur d'onde du pic excitonique λₑₓ de 662 nm, un rapport des intensités des pics d'absorption UV/vis. Iₑₓ/I_{π - π*} de 0,94 et une conductivité σ de 100 S/cm.

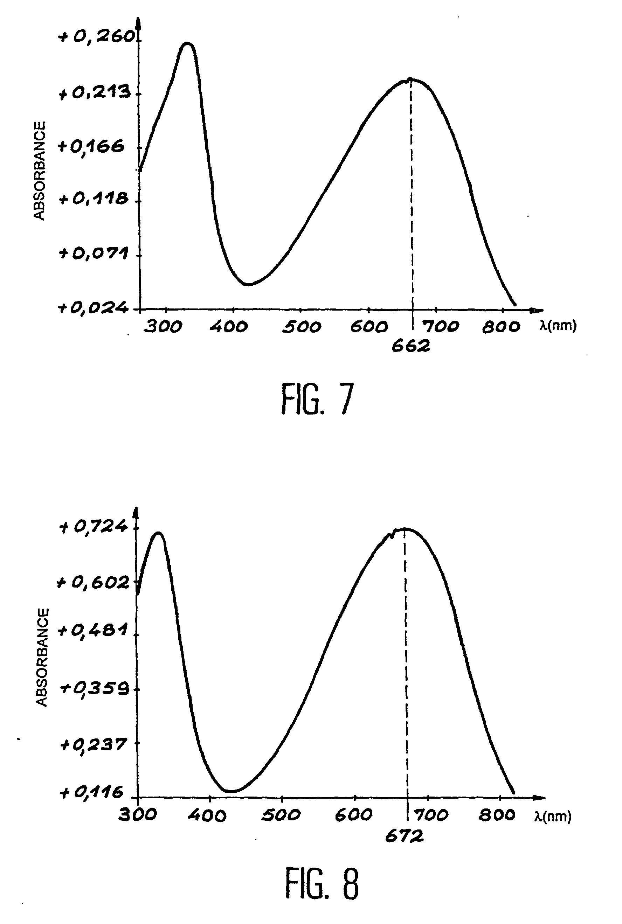

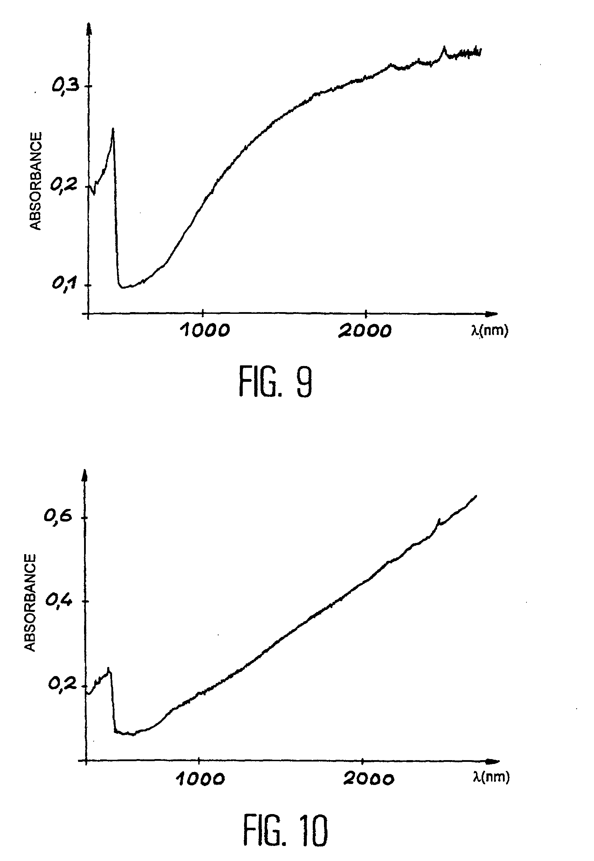

On peut voir l'effet bénéfique de l'extraction par le chloroforme sur les propriétés de l'éméraldine base en faisant la comparaison des spectres d'absorption UV, vis présentés aux figures 7 et 8.

La figure 7 se réfère à une éméraldine base synthétisée à -7°C avant l'extraction et la figure 8 illustre le spectre de cette éméraldine base après l'extraction.

L'éméraldine base soumise à l'extraction (figure 8) présente une bande excitonique plus intense et déplacée vers le rouge : λₑₓ = 672 nm, avec un rapport Iₑₓ/I_{π - π*} = 1,01, tandis que le spectre de l'éméraldine base brute de synthèse (figure 7) indique une longueur d'onde λₑₓ de 662 nm et un rapport des intensités des pics UV/vis. Iₑₓ/I_{π - π*} de 0,87. Ce changement s'accompagne d'une augmentation importante de la masse moléculaire et de I.P. : ηᵢₙₕ = 1,68 dl/g, M_{w} = 50.000 g/mol et I.P. = 2,3 avant extraction, alors que ηᵢₙₕ = 2,18 dl/g, M_{w} = 145.000 g/mol et I.P. = 3,3 après extraction.

Sur les figures 9 et 10, on a représenté les spectres d'absorption UV, vis. IR proches des solutions d'éméraldine protonée par l'ACS dans le méta-crésol faites avec la même éméraldine base avant l'extraction (figure 9) et après l'extraction (figure 10).

Ainsi on s'aperçoit de l'augmentation de la délocalisation des porteurs de charges produite par l'extraction due à l'augmentation de la masse moléculaire. En effet la conductivité du film fait à partir de l'éméraldine base soumise à l'extraction est de 230 S/cm, tandis que la conductivité du film fait à partir de l'éméraldine base brute est de 100 S/cm.

Les exemples suivants illustrent la fabrication de polyanilines par le procédé de l'invention.

### Exemple 1

On prépare une solution de chlorhydrate d'aniline en dissolvant 10 ml (0,1097 mol) d'aniline dans 85 ml d'HCl 3M. On ajoute à cette solution 95 ml d'éthanol et on dissout 16 g de LiCl.

On prépare une solution oxydante en dissolvant 6,25 g (0,0274 mol) de persulfate d'ammonium dans 60 ml d'HCl 2M et on dissout 8 g de LiCl.

On prépare aussi une solution réductrice de FeCl₂ en dissolvant 3,64 g (0,0183 mol) de FeCl₂ et 5 g de LiCl dans 50 ml d'HCl 2M.

On introduit la solution d'aniline dans un petit réacteur de 500 ml prévu avec double paroi et agitation et on refroidit la solution à -25°C par circulation d'un liquide réfrigérant thermostaté permettant de refroidir le réacteur. On refroidit la solution de PSA à - 25°C également, dans un autre réfrigérateur.

On plonge dans la solution d'aniline une électrode de Pt, une électrode de référence au calomel par l'intermédiaire d'un pont électrolytique contenant une solution de LiCl dans l'éthanol et une sonde de température à résistance de Pt de 100 Ω. On relie les électrodes et la sonde à un pHmètre-mVmètre digital informatisé, contrôlé par un ordinateur, permettant d'enregistrer le potentiel rédox de la solution et sa température point par point.

Quand les deux solutions sont arrivées à la température de -25°C, on commence la polymérisation en déversant d'un seul coup la solution de persulfate d'ammonium dans le réacteur contenant la solution de chlorhydrate d'aniline et on commence l'enregistrement du potentiel rédox de la solution et de la température toutes les 15 s. On suit l'évolution de la synthèse en suivant l'évolution du potentiel et de la température en fonction du temps.

On a maintenant un volume total de solution de ~265 ml, ~1M en HCl, ~2,15 M en LiCl et ~36 % en volume d'éthanol.

On met à refroidir maintenant la solution réductrice à la place de la solution oxydante.

La figure 1 illustre l'évolution du potentiel (courbe 1) et de la température (courbe 2) en fonction du temps.

Pour une température de consigne de -25°C, dès l'ajout de l'oxydant on observe une montée immédiate du potentiel rédox de la solution d'aniline de ~445 mV (la valeur initiale) à 830 mV. Ensuite au terme de 3 min le potentiel rédox décroît pour atteindre un minimum vers 680 mV et il remonte après un temps de 15 min pour arriver à un plateau à 800 - 820 mV ou il se maintient pendant 40 min. Ensuite, le potentiel amorce une décroissance.

Lorsqu'on déverse la solution de persulfate d'ammonium dans le réacteur de synthèse contenant la solution d'aniline, la température s'équilibre vite entre les deux solutions, puisqu'il y a toujours un petit écart de température entre les deux solutions. Puis la température décroît de 2°C pendant les premières 20 min., ce qui correspond au commencement de l'étape de synthèse pendant laquelle le potentiel décroît et remonte. Ensuite elle monte dès que le potentiel arrive vers le plateau, elle continue à monter pendant que le potentiel reste sur le plateau et elle arrive à un maximun quand le potentiel commence à décroître après avoir passé le plateau.

A ce moment précis tout le persulfate d'ammonium est réduit et la polyaniline synthétisée se trouve sous la forme de pernigraniline en suspension dans la solution, mais la précipitation commence plus tôt, d'une manière visible après environ 20 min quand le potentiel arrive au plateau.

Pour obtenir la polyaniline sous forme d'éméraldine, on ajoute d'un seul coup la solution de FeCl₂. Pour mieux déterminer le moment de l'ajout du réducteur on regarde aussi la montée en température de la solution qui arrive juste au maximum.

La réaction de polymérisation produisant de la pernigraniline est fort exothermique puisque malgré le refroidissement on ne peut pas empêcher la température de monter de 3,5°C.

Au moment de l'ajout de la solution réductrice le potentiel décroît brusquement vers 440 mV, ce qui indique la réduction totale de la pernigraniline en éméraldine et la température monte rapidement de 4°C, puisque la réduction est également exothermique. Ensuite la température redescend lentement vers la température de consigne de -25°C en 40 min. On arrête le refroidissement et l'enregistrement du potentiel et de la température et on filtre. On peut laisser la solution se réchauffer naturellement jusqu'à la température ambiante et filtrer ensuite.

On filtre la solution sur un entonnoir avec plaque filtrante en verre n°4, on lave abondamment le précipité avec une solution de HCl 1M et on le sèche dans une étuve à vide à 40°C pendant 12 h. On obtient ainsi l'éméraldine brute de synthèse.

Pour obtenir la polyaniline sous sa forme d'éméraldine base, on déprotone la poudre d'éméraldine brute ainsi obtenue, en la mettant en suspension sous agitation dans une solution 0,3M d'hydroxyde d'ammonium pendant 48h. On filtre la solution comme précédemment, on lave abondamment à l'eau et on sèche la poudre sous vide à la température ambiante pendant 24 h. On obtient ainsi l'éméraldine base brute de synthèse.

On soumet ensuite l'éméraldine base brute à une extraction avec du chloroforme p.a. dans un extracteur Soxhlet pendant 8 h pour siphonner un chloroforme incolore. On sèche l'éméraldine base extraite d'abord à l'air, ensuite sous vide, à la température ambiante.

On répète ensuite la déprotonation avec la solution d'hydroxyde d'ammonium pour obtenir l'éméraldine base sous sa forme finale.

Le rendement par rapport au persulfate d'ammonium est de 99 %, par rapport à l'aniline il est de 17 %.

On prépare une solution à 0,1 % d'éméraldine base dans de l'acide sulfurique à 97 % en prenant 36,8 mg d'éméraldine base dans 20 ml d'acide sous agitation magnétique pendant 14 h, on filtre sur un filtre en verre n°4 et on mesure la viscosité inhérente de la solution à 25°C en utilisant un viscosimètre Ubbelohde à capillaire de 0,5 mm. On obtient une viscosité ηᵢₙₕ = 1,97 dl/g.

L'analyse élémentaire du Cl indique un contenu de Cl de 0,5 %.

On prépare une solution à 0,067 % d'éméraldine base dans la NMP contenant 0,5 % de LiCl en dissolvant 1 mg d'éméraldine base dans 1,5 ml de NMP pendant 3 h sous agitation, et on enregistre le spectre d'absorption UV vis entre 330 et 820 nm sur un spectrophotomètre à barette de diodes Hewlell Packard 8451A en utilisant une cuve en quartz suprasil de trajet optique 1 mm. On trouve λₑₓ = 674 nm, λ_{π - π*} = 330 nm et Iₑₓ/I_{π - π*} = 0,98.

On prépare une solution à 0,5 % d'éméraldine base protonée par l'ACS en dissolvant 0,1 g d'éméraldine base et 0,13 g d'ACS dans 19,18 ml de méta-crésol sous agitation à 50°C pendant 48 h et ensuite à la température ambiante pendant au moins 3 semaines. Par évaporation du méta-crésol, à l'air à 50°C pendant 3 jours, on obtient sur un substrat en polypropylène un film de 25 µm d'épaisseur qu'on détache de son substrat par immersion dans une solution d'ACS 1M pendant 1 h. On mesure la conductivité du film par la méthode de van der Pauw après l'avoir rincé avec de l'acétonitrile et séché. On trouve une conductivité σ = 320 S/cm.

On prend une goutte de cette solution et on l'étale entre deux plaques de verre infrasil par adhésion capillaire. On enregistre le spectre d'absorption UV vis. IR proche entre 300 et 2700 nm en utilisant un spectrophotomètre Varian Carry 2400. On trouve un pic polaronique à 444 nm et une large et intense bande d'absorption dans le proche IR ayant son maximum loin dans l'IR au delà du domaine spectral de l'appareil.

L'analyse cristallographique du spectre de diffraction X du film enregistré en transmission indique un taux de cristallinité de ~25 %.

### Exemple 2

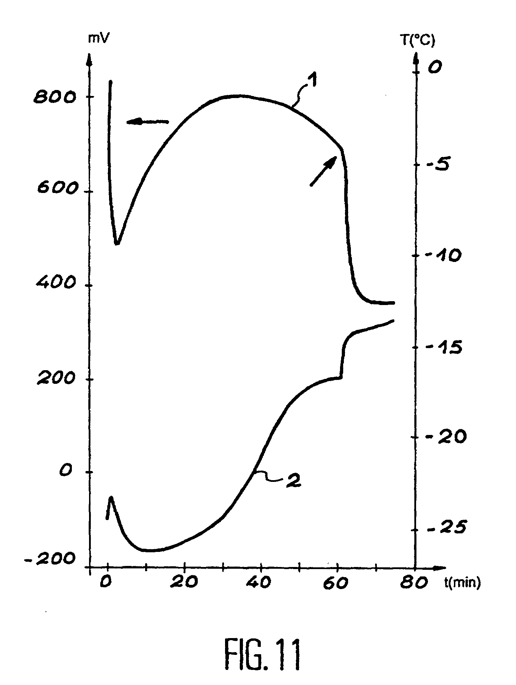

On procède de la même manière que dans l'exemple 1 sauf que l'on utilise un réacteur simple introduit dans une vase Dewar contenant des cristaux d'o-oxylène au point de fusion de -25°C. L'évolution du potentiel rédox et de la température pendant cette synthèse est présenté sur la figure 11. L'évolution du potentiel (courbe 1) est similaire à celle présentée sur la figure 1 correspondant à l'exemple 1, l'évolution de la température (courbe 2) est également similaire jusqu'au moment de l'ajout de la solution réductrice. Au moment de la réduction, la température monte brusquement à cause du dégagement rapide de la chaleur de réduction et après, elle monte normalement par l'échauffement naturel jusqu'à la température ambiante.

Les résultats de mesures de caractérisation n'indiquent pas de différences significatives par rapport aux résultats indiqués dans l'exemple 1, ce qui montre que la température à laquelle on fait la réduction n'a pas d'influence sur les propriétés du polymère.

### Exemple 3

On procède de la même manière que dans l'exemple 1, à la seule différence qu'on fixe la température de consigne à -30°C.

L'évolution du potentiel rédox et de la température pendant la synthèse est similaire à celle présentée dans l'exemple 1. Les rendements sont les mêmes. La seule différence significative réside dans le temps de polymérisation, dans ce cas il est de 110 min.

Les caractéristiques de la polyaniline obtenue sont :
- un contenu de Cl de 0,5 %,
- une viscosité inhérente de 2,1 dl/g,
- une longueur d'onde du pic d'absorption excitonique de l'éméraldine base λₑₓ = 678 nm,
- une longueur d'onde du pic fondamental de l'éméraldine base λ_{π-π*} = 332 nm, et
- un rapport des intensités de ces pics à Iₑₓ/I_{π -π*} = 1,06.

Le spectre d'absorption UV, vis. IR proche de l'éméraldine ne montre pas de différences significatives par rapport à celui de l'éméraldine synthétisée dans l'exemple 1 à -25°C. La conductivité du film obtenu est de 330 S/cm.

## Revendications

1. Procédé de fabrication d'une polyaniline de masse moléculaire élevée sous forme d'éméraldine, qui comprend les étapes suivantes :
a) polymériser l'aniline ou un dérivé d'aniline en pernigraniline, en effectuant la polymérisation dans une solution aqueuse homogène comprenant l'aniline ou le dérivé d'aniline, un acide protonique, un sel, un agent oxydant et de l'éthanol, de façon à obtenir une pernigraniline, et
b) réduire la pernigraniline obtenue dans l'étape a) en éméraldine au moyen d'une solution aqueuse réductrice ne contenant pas d'aniline.

2. Procédé selon la revendication 1, dans lequel la solution réductrice est une solution aqueuse de chlorure ferreux comprenant l'acide protonique et le sel utilisés dans l'étape a).

3. Procédé selon la revendication 2, dans lequel la solution réductrice est une solution de FeCl₂ de concentration comprise entre 2,5 et 3 M contenant du LiCl en concentration de 2 à 2,5 M dans HCl en concentration de 1,5 à 2,5 M, contenant le double de la quantité nécessaire pour réduire la polyaniline de l'état d'éméraldine.

4. Procédé selon la revendication 1, dans lequel la solution réductrice est une solution aqueuse de chlorure de cuivre (CuCl) ou de chlorure d'étain (SnCl₂) comprenant l'acide protonique et le sel utilisé dans l'étape a).

5. Procédé selon l'une quelconque des revendications 1 à 4, dans lequel l'acide protonique est l'acide chlorhydrique, le sel est le chlorure de lithium, et l'agent oxydant est le persulfate d'ammonium.

6. Procédé selon la revendication 1, dans lequel on effectue l'étape a) en ajoutant à une solution aqueuse d'aniline ou de dérivé d'aniline, contenant l'acide protonique, le sel et de l'éthanol, une solution de l'agent oxydant et du sel dans l'acide protonique.

7. Procédé selon la revendication 5 ou 6, dans lequel la solution de polymérisation comprend :
- 0,25 à 0,5 mol/l d'aniline ou de dérivé d'aniline,
- 0,5 à 2 mol/l d'acide chlorhydrique,
- 2 à 3 mol/l de chlorure de lithium,
- 30 à 40 % en volume d'éthanol, et
- une quantité de persulfate d'ammonium telle que le rapport molaire du persulfate d'ammonium à l'aniline ou au dérivé d'aniline PSA/An soit de 0,2 à 1,5.

8. Procédé selon l'une quelconque des revendications 1 à 7, dans lequel on réalise l'étape a) à une température située dans la gamme allant de -45°C à -5°C.

9. Procédé selon l'une quelconque des revendications 5 à 8, dans lequel on contrôle la réaction de polymérisation de l'étape a) en déterminant le potentiel rédox de la solution aqueuse dans laquelle s'effectue la polymérisation de façon à arrêter cette réaction de polymérisation par addition de la solution réductrice lorsque le potentiel rédox amorce une décroissance après avoir atteint une valeur maximale.

10. Procédé selon l'une quelconque des revendications 1 à 9, comprenant de plus une étape c) consistant à soumettre l'éméraldine séparée du milieu réactionnel de l'étape b) à un traitement d'extraction et de post-polymérisation par du chloroforme.

11. Procédé selon la revendication 10, dans lequel on soumet de plus l'éméraldine traitée par le chloroforme à une déprotonation.

12. Procédé selon la revendication 10, dans lequel on soumet l'éméraldine séparée du milieu réactionnel de l'étape b) à une déprotonation avant d'effectuer l'étape c).

13. Procédé selon la revendication 11 ou 12, dans lequel la déprotonation est effectuée au moyen d'une solution aqueuse d'hydroxyde d'ammonium 0,1 à 0,3 M, pendant 48 à 72 h, à la température ambiante.

14. Procédé selon la revendication 11, dans lequel on soumet l'éméraldine déprotonée à un reprotonation par l'acide (±)-10-camphre sulfonique pour obtenir un taux de protonation de 0,5 H⁺ par atome d'azote.

15. Procédé selon l'une quelconque des revendications 10 à 13, de fabrication d'une polyaniline de masse moléculaire élevée sous forme d'éméraldine base, ayant une viscosité inhérente de 1,8 à 2,2 dl/g (à 25°C, en solution à 0,1 % dans de l'acide sulfurique concentré), et étant totalement soluble dans le méta-crésol ou dans l'hexafluoroisopropanol, après protonation par l'acide (±)-10-camphre sulfonique.

## Patentansprüche

1. Verfahren zur Herstellung eines Polyanilins von hohem Molekulargewicht in Form von Emeraldin, das die folgenden Schritte umfasst:
a) Anilin oder ein Anilinderivat zu Pemigranilin zu polymerisieren, wobei man die Polymerisation in einer homogenen wässrigen Lösung, die das Anilin oder das Anilinderivat, eine Protonsäure, ein Salz, ein Oxidationsmittel und Ethanol enthält, derart ausführt, dass man ein Pernigranilin erhält, und
b) das in Schritt a) erhaltene Pernigranilin mittels einer reduzierenden wässrigen Lösung, die kein Anilin enthält, zu Emeraldin zu reduzieren.

2. Verfahren nach Anspruch 1, in welchem die reduzierende Lösung eine wässrige Lösung von Eisen(II)-chlorid ist, die die Protonsäure und das Salz, verwendet in Schritt a), enthält.

3. Verfahren nach Anspruch 2, in welchem die reduzierende Lösung eine Lösung von FeCl₂ mit einer Konzentration zwischen 2,5 und 3 mol/l ist, die LiCl in einer Konzentration von 2 bis 2,5 mol/l in HCl in einer Konzentration von 1,5 bis 2,5 mol/l enthält und die das Doppelte der Menge enthält, die erforderlich ist, um das Polyanilin auf den Emeraldin-Zustand zu reduzieren.

4. Verfahren nach Anspruch 1, in welchem die reduzierende Lösung eine wässrige Lösung von Kupferchlorid (CuCl) oder Zinnchlorid (SnCl₂) ist, die die Protonsäure und das Salz, verwendet in Schritt a), enthält.

5. Verfahren nach einem der Ansprüche 1 bis 4, in welchem die Protonsäure Salzsäure ist, das Salz Lithiumchlorid ist und das Oxidationsmittel Ammoniumpersulfat ist.

6. Verfahren nach Anspruch 1, in welchem man den Schritt a) ausführt, indem man zu einer wässrigen Lösung von Anilin oder von Anilinderivat, die die Protonsäure, das Salz und Ethanol enthält, eine Lösung des Oxidationsmittels und des Salzes in der Protonsäure hinzufügt.

7. Verfahren nach Anspruch 5 oder 6, in welchem die Polymerisationslösung enthält:
- 0,25 bis 0,5 mol/l Anilin oder Anilinderivat,
- 0,5 bis 2 mol/l Salzsäure,
- 2 bis 3 mol/l Lithiumchlorid,
- 30 bis 40 Vol.-% Ethanol und
- eine derartige Menge Ammoniumpersulfat, dass das Molverhältnis von Ammoniumpersulfat zu Anilin oder Anilinderivat (APS/An) 0,2 bis 1,5 beträgt.

8. Verfahren nach einem der Ansprüche 1 bis 7, in welchem man den Schritt a) bei einer Temperatur ausführt, die im von -45°C bis -5°C gehenden Bereich liegt.

9. Verfahren nach einem der Ansprüche 5 bis 8, in welchem man die Polymerisationsreaktion des Schritts a) kontrolliert, indem man das Redoxpotential der wässrigen Lösung, in welcher die Polymerisation erfolgt, bestimmt, um diese Polymerisationsreaktion durch Zusatz der reduzierenden Lösung anzuhalten, wenn das Redoxpotential wieder abnimmt, nachdem es einen maximalen Wert erreicht hat.

10. Verfahren nach einem der Ansprüche 1 bis 9, darüber hinaus einen Schritt c) umfassend, der darin besteht, das von dem Reaktionsmedium des Schritts b) abgetrennte Emeraldin einer Extraktions- und Post-Polymerisationsbehandlung durch Chloroform zu unterziehen.

11. Verfahren nach Anspruch 10, in welchem man femer das durch Chloroform behandelte Emeraldin einer Deprotonierung unterzieht.

12. Verfahren nach Anspruch 10, in welchem man das von dem Reaktionsmedium des Schritts b) getrennte Emeraldin einer Deprotonierung unterzieht, bevor man den Schritt c) ausführt.

13. Verfahren nach Anspruch 11 oder 12, in welchem die Deprotonierung mittels einer wässrigen Lösung von 0,1 bis 0,3 mol/l Ammoniumhydroxid während 48 bis 72 h bei Umgebungstemperatur ausgeführt wird.

14. Verfahren nach Anspruch 11, in welchem man das deprotonierte Emeraldin einer Reprotonierung durch (±)-Campher-10-sulfonsäure unterzieht, um einen Protonierungsgrad von 0,5 H⁺ pro Stickstoffatom zu erhalten.

15. Verfahren nach einem der Ansprüche 10 bis 13 zur Herstellung eines Polyanilins hohen Molekulargewichts in Form von Emeraldin-Base, das eine inhärente Viskosität von 1,8 bis 2,2 dl/g (bei 25°C, in 0,1%iger Lösung in konzentrierter Schwefelsäure) hat und das nach Protonierung durch die (±)-Campher-10-sulfonsäure vollständig in m-Kresol oder Hexafluoroisopropanol löslich ist.

## Claims

1. Process for making a high molecular mass polyaniline in the form of emeraldine, which includes the following steps:
a) polymerising aniline or an aniline derivative to make pernigraniline by doing the polymerisation in a homogeneous aqueous solution including the aniline or the aniline derivative, a protonic acid, a salt, an oxidising agent and ethanol to yield pernigraniline, and
b)reducing the pernigraniline obtained in step a) to emeraldine by means of an aqueous reducing solution which does not contain aniline.

2. Process according to claim 1, in which the reducing solution is an aqueous solution of ferrous chloride including the protonic acid and salt used in step a).

3. Process according to claim 2, in which the reducing solution is a solution of FeCl₂ with a concentration between 2.5 and 3M containing LiCl in a concentration between 2 and 2.5 M in HCl in a concentration of 1.5 to 2.5 M, containing twice the quantity needed to reduce the polyaniline to emeraldine.

4. Process according to claim 1, in which the reducing solution is an aqueous solution of copper chloride (CuCl) or tin chloride (SnCl₂) including the protonic acid and salt used in step a).

5. Process according to any of claims 1 to 4, in which the protonic acid is hydrochloric acid, the salt is lithium chloride, and the oxidising agent is ammonium persulphate.

6. Process according to claim 1, in which step a) is done by adding an aqueous solution of aniline or an aniline derivative containing the protonic acid, salt and ethanol, a solution of the oxidising agent and the salt in the protonic acid.

7. Process according to claim 5 or 6, in which the polymerisation solution includes:
- 0.25 to 0.5 mol/l of aniline or aniline derivative,
- 0.5 to 2 mol/l of hydrochloric acid,
- 2 to 3 mol/l of lithium chloride,
- 30 to 40% ethanol by volume and
- a quantity of ammonium persulphate such that the molar ratio of ammonium persulphate to aniline or the aniline derivative APS/An is from 0.2 to 1.5%.

8. Process according to any of claims 1 to 7, in which step a) is done at a temperature in the range from -45°C to -5°C.

9. Process according to any of claims 5 to 8, in which the polymerisation reaction of step a) is monitored by determining the redox potential of the aqueous solution in which the polymerisation is done in order to stop this polymerisation reaction by addition of the reducing solution when the redox potential starts to decrease after having reached a maximum value.

10. Process according to any of claim 1 to 9, including in addition a step c) involving the emeraldine separated from the reaction medium of step b) undergoing an extraction and post-polymerisation treatment with chloroform.

11. Process according to claim 10, in which the emeraldine treated with chloroform also undergoes deprotonation.

12. Process according to claim 10, in which the emeraldine separated from the reaction medium of step b) undergoes deprotonation before step c).

13. Process according to claim 11 or 12, in which deprotonation is performed with a 0.1 to 0.3M aqueous solution of ammonium hydroxide over 48 to 72 hours at room temperature.

14. Process according to claim 11, in which the deprotonated emeraldine undergoes reprotonation with (±)-10-camphor sulphonic acid to obtain a protonation rate of 0.5 H⁺ per nitrogen atom.

15. Process according to any of claims 10 to 13 for the production of a high molecular weight polyaniline in the form of an emeraldine base having an inherent viscosity of 1.8 to 2.2 dl/g (at 25°C, in 0.1% solution in concentrated sulphuric acid) and which is totally soluble in meta-cresol or in hexafluoroisopropanol after protonation by (±)-10-camphor sulphonic acid.
